Europäisches Patentamt

European Patent Office

Office européen des brevets

(11) Numéro de publication: **0 090 981**
**A2**

# (12) DEMANDE DE BREVET EUROPEEN

(21) Numéro de dépôt: 83102680.2

(22) Date de dépôt: 18.03.83

(51) Int. Cl.³: **B 65 G 65/28**
**B 65 G 63/04**

(30) Priorité: 05.04.82 FR 8206007

(43) Date de publication de la demande:
12.10.83 Bulletin 83/41

(84) Etats contractants désignés:
AT BE CH DE FR GB IT LI LU NL SE

(71) Demandeur: ETUDE SERVICE TECHNOLOGIE S.à.r.l.
14, Passage de l'Hôtel de Ville
F-68100 Mulhouse(FR)

(72) Inventeur: Vogrin, Erwin
36, rue de Verdun
F-68400 Riedisheim(FR)

(74) Mandataire: Nithardt, Roland
CABINET ROLAND NITHARDT 2, rue du 17 Novembre
F-68100 Mulhouse(FR)

(54) Dispositif de manutention et de stockage de matériaux en vrac.

(57) La présente invention concerne un dispositif de manutention et de stockage de matériaux en vrac.

Ce dispositif se compose essentiellement d'une colonne centrale 13, d'un pont fixe 14, d'un premier pont tournant 15, d'un second pont tournant 16 et d'un ruban transporteur 38. Les matériaux déchargés dans un premier déversoir 11 sont transposés par un élévateur 19 sur le ruban transporteur 18 du pont fixe 14. Ils sont ensuite déversés dans le déversoir 20, pour être amenés sur le ruban transporteur 27 du pont de stockage 15 d'où ils sont évacués à travers le chariot verseur 28. Un extracteur 33 permet de prélever ces matériaux et de les transporter au moyen du ruban sans fin 34, d'où ils sont déversés dans le troisième déversoir 35 sur le ruban transporteur 38 qui les amène à l'aire d'utilisation.

Dispositif utilisable pour stocker du charbon, du gravier, des céréales, etc...

FIG. 1

0090981

## DISPOSITIF DE MANUTENTION ET DE STOCKAGE DE MATERIAUX EN VRAC

La présente invention concerne un dispositif de manutention et de stockage de matériaux en vrac, notamment de matériaux divisés ou granuleux tels que du charbon, du gravier, des céréales ou similaires, comportant des moyens mécaniques de stockage pour prélever en continu lesdits matériaux d'un premier déversoir et pour les transporter vers une aire de stockage, et des moyens mécaniques de déstockage pour prélever les matériaux en continu et pour les transporter vers une aire d'utilisation.

On connaît déjà des dispositifs de ce type comportant au moins un pont roulant mobile en translation sur deux rails parallèles. Pour disposer d'une surface de stockage importante, il est indispensable de construire soit un pont très large, soit des rails particulièrement longs, ce qui aboutit nécessairement à des installations de grandes dimensions et de coût élevé.

En outre, ces installations ne sont pas conçues pour travailler en continu, ni lors du stockage, ni lors du déstockage, et ne peuvent par conséquent travailler avec une rentabilité d'exploitation optimale.

La présente invention se propose de pallier ces inconvénients en réalisant un dispositif offrant une surface de stockage importante pour un encombrement minimal, et permettant à la fois un stockage et un déstockage en continu, simultanés ou décalés dans le temps.

Dans ce but, le dispositif de manutention et de stockage de matériaux en vrac selon l'invention est caractérisé en ce que l'aire de stockage est circulaire, et en ce que les moyens mécaniques de stockage et de déstockage comportent au moins un pont tournant sensiblement horizontal, agencé pour pouvoir tourner au-dessus de l'aire de stockage, et des organes de prélèvement mobiles montés sur ledit pont, agencés pour pouvoir balayer toute la surface de l'aire de stockage au cours de la rotation du pont leur servant de support.

Selon une forme de réalisation particulièrement avantageuse, le dispositif selon l'invention comporte deux ponts tournants superposés, corres-

- 2 -                                    0090981

pondant respectivement auxdits moyens mécaniques de stockage et auxdits moyens mécaniques de déstockage.

Dans cette réalisation, le dispositif comporte une colonne centrale prévue pour soutenir une des extrémités de chaque pont tournant, et au moins un équipement de roulement monté sur ladite colonne et agencé pour permettre la rotation des ponts tournants autour de l'axe de la colonne centrale.

Pour faciliter la rotation des ponts tournants, le dispositif comporte deux structures circulaires concentriques définissant la périphérie de l'aire de stockage circulaire, et deux colonnes mobiles respectivement solidaires des autres extrémités de chaque pont tournant, ces colonnes mobiles étant pourvues chacune d'au moins une roue, respectivement adaptée à l'une desdites structures circulaires, pour soutenir respectivement ladite autre extrémité de chaque pont tournant lorsqu'il est entraîné en rotation autour de l'axe de la colonne centrale.

Selon une forme de réalisation préférée, le pont de stockage a une longueur supérieure à celle du pont de déstockage, et décrit une surface circulaire parallèle et disposée au-dessus de celle décrite par le pont de déstockage lorsqu'ils sont entraînés en rotation autour de la colonne centrale, la colonne mobile soutenant l'extrémité libre du pont de stockage étant agencée pour rouler sur la structure circulaire extérieure, alors que la colonne mobile soutenant l'extrémité libre du pont de déstockage est agencée pour rouler sur la structure circulaire intérieure.

Les structures circulaires intérieure et extérieure comportent avantageusement un muret circulaire qui délimite l'aire de stockage et qui supporte deux rails circulaires concentriques, dont le profil est adapté à celui des roues des colonnes mobiles.

Pour assurer un stockage sur toute la surface de l'aire de stockage, les moyens mécaniques de stockage comportent un chariot verseur mobile en translation sur au moins une distance déterminée le long du pont de stockage.

- 3 -

0090981

En outre, les moyens de stockage sont de préférence équipés d'un élévateur agencé pour transposer les matériaux du premier déversoir sur le pont de stockage, et au moins un ruban transporteur sans fin monté sur le pont de stockage pour transporter ces matériaux jusqu'au chariot verseur.

Selon un mode de construction préféré et particulièrement avantageux, lesdits moyens de stockage comportent un pont fixe disposé entre l'élévateur et la colonne centrale, ce pont fixe étant équipé d'un ruban transporteur sans fin agencé pour transporter les matériaux rejetés par l'élévateur jusqu'à un deuxième déversoir monté sur la colonne centrale, ce second déversoir étant agencé pour déverser lesdits matériaux sur le ruban transporteur sans fin du pont de stockage. Ce mode de réalisation permet de travailler en continu, les matériaux étant amenés par un moyen de transport quelconque, entassés dans le premier déversoir à grande capacité, transposés par un élévateur sur le pont fixe équipé d'un ruban transporteur sans fin, déversés dans le second déversoir fixé sur la colonne centrale d'où ils sont déversés sur le ruban transporteur sans fin du pont de stockage pour aboutir au chariot verseur préalablement amené dans la position souhaitée.

Les moyens mécaniques de déstockage comportent de préférence un dispositif extracteur, mobile en translation sur au moins une distance prédéterminée le long du pont de déstockage. Ce dispositif extracteur est agencé pour prélever des matériaux stockés dans l'aire de stockage et pour les amener sur un ruban transporteur sans fin monté sur le pont de déstockage. En outre, ces moyens de déstockage comportent de préférence un troisième déversoir agencé pour recevoir les matériaux prélevés par l'extracteur et transportés par ce ruban transporteur. Selon un mode de réalisation avantageux, le troisième déversoir est solidaire de la colonne centrale, par exemple à l'intérieur de la colonne centrale, et est agencé pour coopérer avec un organe de transport, par exemple un ruban transporteur sans fin fixe en position, prévu pour recevoir les matériaux évacués par ledit troisième déversoir et pour les transporter à l'aire d'utilisation. Le troisième déversoir peut être monté à l'extérieur de la colonne centrale ou ménagé à l'intérieur de cette colonne.

Lorsque le troisième déversoir est monté à la périphérie de la colonne

- 4 -

0090981

centrale, le dispositif comporte avantageusement un distributeur circulaire qui évacue les matériaux sur l'organe de transport en direction
de l'aire d'utilisation.

La présente invention et ses principaux avantages apparaîtront plus en
détail en référence à la description d'un exemple de réalisation préféré et au dessin annexé, dans lequel :

La figure 1 représente une vue en élévation du dispositif selon l'invention,

La figure 2 représente une vue de dessus du dispositif de la fig. 1,

La figure 3 représente une vue en élévation, à échelle agrandie, de la
partie supérieure de la colonne centrale portant le second déversoir,

La figure 4 représente une vue de détail, partiellement coupée, du
troisième déversoir et du distributeur circulaire, et

La figure 5 représente une vue en plan du distributeur circulaire de

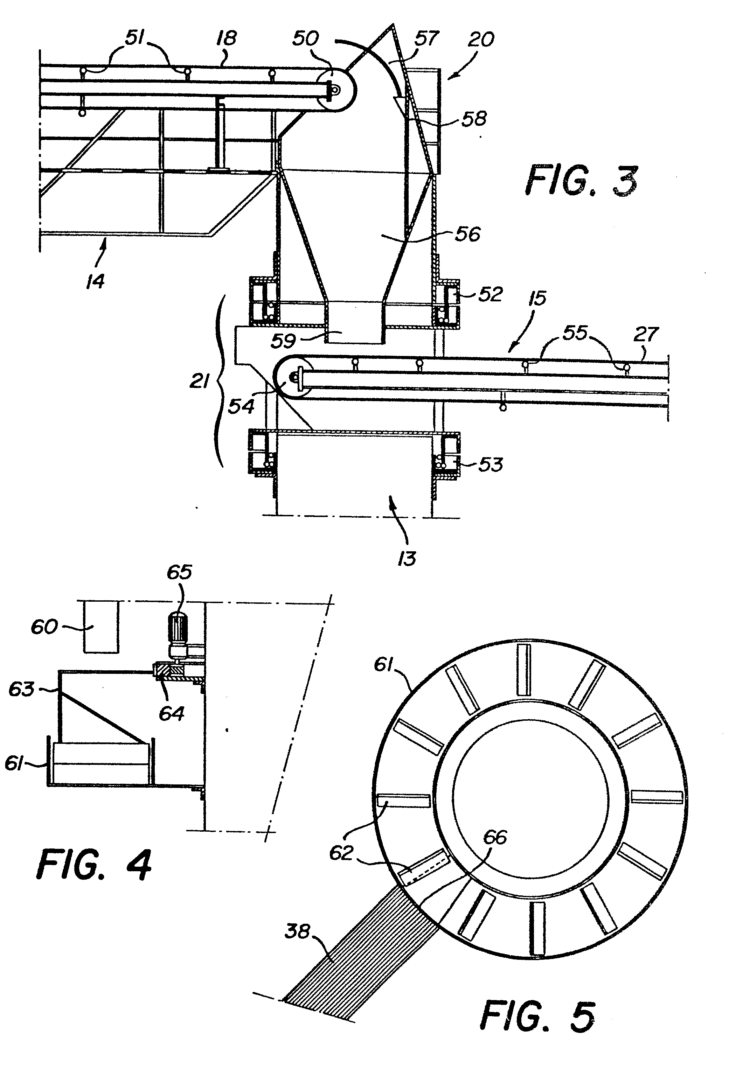

la fig. 4.

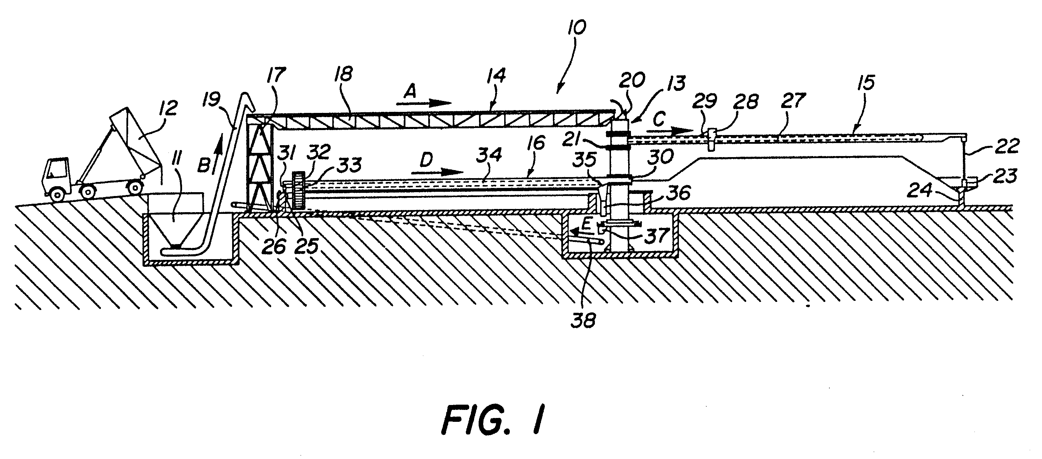

En référence à la fig. 1, le dispositif 10 selon l'invention comporte
un premier déversoir 11 accessible par exemple par un camion 12 à benne
basculante, et constitué de préférence par une trémie de grosse capacité, une colonne centrale 13 supportant une des extrémités d'un pont
fixe 14, d'un pont de stockage tournant 15 et d'un pont de déstockage
tournant 16.

Le pont fixe 14 est posé sur l'extrémité supérieure de la colonne centrale 13 et supporté à son autre extrémité par une colonne verticale fixe 17. Ce pont est équipé d'une bande transporteuse sans fin 18 destinée à déplacer des matériaux (non représentés) dans le sens de la flèche A. Ces matériaux déchargés par le véhicule utilitaire 12 dans la
trémie 11 sont soulevés dans le sens de la flèche B par un élévateur 19,
d'où ils sont acheminés par le ruban transporteur 18 jusqu'à un second
déversoir 20, illustré plus en détail par la fig. 3.

Le pont de stockage 15 est fixé par une de ses extrémités à un roulement 21 solidaire de la colonne centrale 13, et soutenu à son autre extrémité par une colonne verticale mobile 22 pourvue d'une roue 23 ou d'un train de roues, agencée pour rouler sur une structure circulaire 24. Cette structure circulaire 24 est de préférence constituée par un muret circulaire servant à délimiter l'aire de stockage, et par deux rails concentriques 25 et 26 fixés à l'extrémité supérieure du muret. Un ruban transporteur sans fin 27 est monté sur le pont de stockage pour déplacer le matériau dans le sens de la flèche C, jusqu'à un chariot verseur 28 mobile en translation et agencé pour déverser les matériaux en un point quelconque de l'aire de stockage selon sa position et celle du pont de stockage 15. Un plan incliné 29 assure le passage des matériaux du ruban transporteur 27 vers le cône du chariot verseur 28.

Le pont de déstockage 16 est fixé par une de ses extrémités à un roulement 30 solidaire de la colonne centrale 13, et soutenu à son autre extrémité par une colonne verticale 31 pourvue d'une roue 32 ou d'un train de roues, agencée pour rouler sur la structure circulaire 24. En pratique, la roue 23 de la colonne 22 est supportée par le rail extérieur 26 et la roue 32 de la colonne 31 roule sur le rail intérieur 25. De cette manière, le pont de stockage peut balayer librement toute l'aire de stockage et le pont de déstockage peut balayer librement une surface circulaire disposée sous celle balayée par le pont de stockage, sans que les deux installations interfèrent ou se gênent mutuellement. Le pont de déstockage porte un dispositif extracteur mobile 33 d'un type connu en soi et un ruban transporteur sans fin 34, agencé pour transporter les matériaux prélevés par l'extracteur 33 sur l'aire de stockage et déversés sur le tapis roulant dans le sens de la flèche D. Ces matériaux sont réceptionnés par un troisième déversoir 35, montés à la périphérie de la colonne centrale 13 d'où ils sont transmis au travers d'une goulotte 36 à un distributeur circulaire 37 (représenté plus en détail par les fig. 4 et 5) qui les décharge sur un ruban transporteur sans fin 38 dans le sens de la flèche E, pour les amener vers une aire d'utilisation (non représentée). Le ruban transporteur 38 est fixe en position. L'aire d'utilisation peut être constituée selon le cas par les chaudières d'une installation de chauffage à distance ou d'une centrale thermique, lorsque le matériau utilisé est un combustible ou une installation pour fabriquer des objets en béton lorsque les matériaux transportés sont des graviers ou toute installation similaire.

Un des principaux avantages de ce dispositif est dû au fait que le stockage et le déstockage peuvent être effectués en continu, ce qui supprime tous les temps morts et confère à l'installation un haut coefficient de rentabilité.

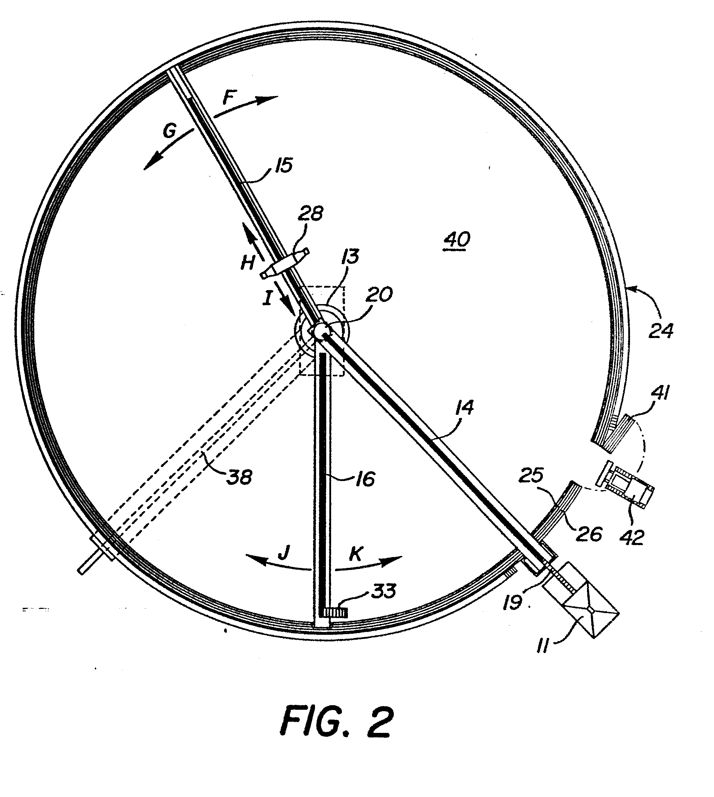

La fig. 2 illustre, vu de dessus, l'agencement général des différents éléments qui composent le dispositif selon l'invention. L'aire de stockage 40 est délimitée par le muret 24 qui porte, à sa surface supérieure annulaire, le rail intérieur 25 et le rail extérieur 26. Une porte 41 pivotante autour d'un axe vertical peut être amenée dans sa position ouverte représentée par la figure, pour donner accès à un engin tel que par exemple une pelle mécanique 42 destinée à effectuer certaines opérations sur le stock, notamment lorsque le dispositif extracteur 33 tombe en panne.

Comme mentionné précédemment, le dispositif comporte de préférence le pont fixe 14 qui relie l'extrémité de l'élévateur 19 au second déversoir 20, le pont de stockage 15 pouvant tourner autour de la colonne centrale 13 dans deux directions opposées indiquées par les flèches F et G. Ce pont sert de support au chariot verseur 28 mobile en translation dans les deux directions indiquées par les flèches H et I. Le pont tournant de déstockage 16 peut également tourner dans les deux directions indiquées par les flèches J et K. Il porte le dispositif extracteur 33 qui peut se déplacer en translation le long du pont 16 pour balayer toute la surface de l'aire de stockage 40.

Enfin, le ruban transporteur sans fin 38 est destiné à recueillir les matériaux pour les délivrer finalement à l'aire d'utilisation.

La fig. 3 montre plus en détail l'extrémité supérieure de la colonne centrale équipée du déversoir 20 et supportant une des extrémités du pont fixe 14 et une des extrémités du pont tournant 15. Le pont fixe 14 est de préférence réalisé selon une construction traditionnelle en profilé métallique et repose, de façon rigide, à l'extrémité supérieure de la colonne 13. Il sert de support à une bande transporteuse sans fin 18 comportant un cylindre d'extrémité 50 et un certain nombre de rouleaux supports 51 répartis sur toute sa longueur pour soutenir les charges transportées d'une manière connue en soi.

La tête du pont de stockage 15 est montée sur un roulement 21 constitué par exemple par deux couronnes à billes 52 et 53. Ce pont est de préférence également réalisé à l'aide d'une structure métallique, qui sert de support à un ruban transporteur sans fin 27 tournant autour d'un cylindre d'extrémité 54, et supporté par un ensemble de rouleaux 55 répartis sur sa longueur pour supporter les charges transportées. Le second déversoir 20 comporte de préférence une goulotte conique 56 et des déflecteurs 57 et 58, l'ensemble étant ménagé à l'intérieur de la tête de la colonne centrale 13, au moins partiellement symétriquement par rapport à l'axe de cette dernière. L'orifice inférieur 59 de la goulotte 56 est disposé au-dessus de l'extrémité antérieure du ruban transporteur 27, de telle manière que l'ensemble des matériaux évacués à l'extrémité postérieure du ruban transporteur 18 tombe sur le tapis roulant constitué par le ruban transporteur 27, quelle que soit l'orientation du pont de stockage 15.

Les fig. 4 et 5 illustrent des détails du dispositif récupérateur placé à l'extrémité du pont de déstockage 16. Ce dispositif récupérateur se compose essentiellement du troisième déversoir 35, dont la goulotte 60 débouche au-dessus d'un distributeur rotatif constitué essentiellement d'un couloir annulaire 61, à l'intérieur duquel tourne un ensemble de pales radiales 62 fixées par un support 63 à une couronne rotative 64 entraînée par un moteur d'entraînement 65. Le couloir annulaire 61 présente un orifice 66 qui débouche au-dessus du ruban transporteur 38, de sorte que les matériaux déversés dans le couloir 61 en un point quelconque de ce couloir (en fonction de l'orientation momentanée du pont de déstockage 16) sont poussés par les palettes 62 pour finalement être évacués au travers de l'orifice 66 sur le ruban transporteur 38.

Selon une autre forme de réalisation, le troisième déversoir 35 est monté à l'intérieur de la colonne centrale 13, de sorte que les matériaux seront déversés au travers d'une goulotte directement sur le ruban

**0090981**

transporteur 38. Ce montage permettra d'éviter la construction d'un distributeur rotatif. Bien entendu, la présente invention n'est pas limitée à la forme de réalisation décrite, mais peut subir différentes modifications et se présenter sous différentes variantes évidentes pour l'homme de l'art.

- 9 -

0090981

Revendications

1. Dispositif de manutention et de stockage de matériaux en vrac, notamment de matériaux divisés ou granuleux tels que charbon, gravier, céréales ou similaires, comportant des moyens mécaniques de stockage pour prélever en continu lesdits matériaux d'un premier déversoir (11) et pour les transporter vers une aire de stockage (40), et des moyens mécaniques de déstockage pour prélever ces matériaux en continu et pour les transporter vers une aire d'utilisation, caractérisé en ce que l'aire de stockage (40) est circulaire, en ce que les moyens mécaniques de stockage et de déstockage comportent au moins un pont tournant (15 ou 16) sensiblement horizontal, agencé pour pouvoir se déplacer en rotation au-dessus de l'aire de stockage (40), et des organes de prélèvement mobiles (33) montés sur ledit pont tournant, agencés pour pouvoir balayer toute la surface de l'aire de stockage au cours de la rotation du pont leur servant de support.

2. Dispositif selon la revendication 1, caractérisé en ce qu'il comporte deux ponts tournants superposés (15 et 16) correspondant respectivement auxdits moyens mécaniques de stockage et auxdits moyens mécaniques de déstockage.

3. Dispositif selon la revendication 2, caractérisé en ce qu'il comporte une colonne centrale (13) prévue pour soutenir une des extrémités de chaque pont tournant, et au moins un équipement de roulement (21, 30) monté sur ladite colonne (13) et agencé pour permettre la rotation des ponts tournants (15 et 16) autour de l'axe de la colonne centrale.

4. Dispositif selon l'une quelconque des revendications 2 ou 3, caractérisé en ce qu'il comporte une structure circulaire (24) définissant la périphérie de l'aire de stockage circulaire (40), et deux colonnes mobiles (22, 31) respectivement solidaires des autres extrémités de chaque pont tournant, ces colonnes mobiles étant pourvues chacune d'au moins une roue (23, 32) adaptée pour rouler sur ladite structure circulaire, pour soutenir respectivement ladite autre extrémité de chaque pont tournant lorsqu'il est entraîné en rotation autour de l'axe de la colonne centrale.

5. Dispositif selon la revendication 4, caractérisé en ce que le pont de stockage (15) a une longueur supérieure à celle du pont de déstockage (16), en ce qu'en rotation il décrit une surface circulaire parallèle et disposée au-dessus de celle décrite par le pont de déstockage, en ce que la colonne mobile (22) soutenant l'extrémité libre du pont de stockage (15) est agencée pour rouler sur la structure circulaire (24) à l'extérieur de la trajectoire suivie par la roue (32) de la colonne (31).

6. Dispositif selon la revendication 4, caractérisé en ce que la structure circulaire (24) comporte un muret annulaire qui délimite l'aire de stockage (40) et supporte deux rails circulaires concentriques (25, 26), dont le profil est respectivement adapté à celui des roues correspondantes (23, 32) des colonnes mobiles (22, 31).

7. Dispositif selon la revendication 2, caractérisé en ce que lesdits moyens mécaniques de stockage comportent un chariot verseur (28), mobile en translation sur au moins une distance déterminée le long du pont de stockage (15).

8. Dispositif selon la revendication 2, caractérisé en ce que lesdits moyens de stockage comportent un élévateur (19) agencé pour transposer les matériaux du premier déversoir (11) sur le pont de stockage (15), et au moins un ruban transporteur sans fin (27) monté sur le pont de stockage (15) pour transporter ces matériaux jusqu'au chariot verseur (28).

9. Dispositif selon la revendication 8, caractérisé en ce que lesdits moyens de stockage comportent un pont fixe (14) disposé entre l'élévateur (19) et la colonne centrale (13), ce pont fixe étant équipé d'un ruban transporteur sans fin (18) agencé pour transporter les matériaux rejetés par l'élévateur (19) jusqu'à un deuxième déversoir (20) monté sur la colonne centrale, le deuxième déversoir étant agencé pour déverser lesdits matériaux sur le ruban transporteur sans fin (27) du pont de stockage (15).

10. Dispositif selon la revendication 2, caractérisé en ce que lesdits moyens mécaniques de déstockage comportent un dispositif extracteur (33) mobile en translation sur au moins une distance prédéterminée le long du pont de déstockage (16).

11. Dispositif selon la revendication 10, caractérisé en ce que le dispositif extracteur (33) des moyens mécaniques de déstockage est agencé pour prélever des matériaux stockés dans l'aire de stockage (40) et pour les amener sur un ruban transporteur sans fin (34) monté sur le pont de déstockage (16), et en ce qu'il comporte un troisième déversoir (35) agencé pour recevoir les matériaux prélevés par le dispositif extracteur et transportés par ce ruban transporteur (34).

12. Dispositif selon la revendication 11, caractérisé en ce que le troisième déversoir (35) est solidaire de la colonne centrale (13), et en ce que ce déversoir est prévu pour coopérer avec un organe de transport (38) agencé pour recevoir les matériaux évacués par le troisième déversoir.

13. Dispositif selon la revendication 12, caractérisé en ce que le troisière déversoir (35) est monté à la périphérie de la colonne centrale (13).

14. Dispositif selon la revendication 12, caractérisé en ce que le troisième déversoir (35) est logé à l'intérieur de la colonne centrale (13).

15. Dispositif selon la revendication 13, caractérisé en ce qu'il comporte un distributeur circulaire agencé pour recevoir les matériaux éjectés à travers le troisième déversoir, et pour les déposer sur le ruban transporteur sans fin (38).

0090981

FIG. I

**FIG. 2**

0090981

FIG. 3

FIG. 4

FIG. 5